# EUROPÄISCHE PATENTSCHRIFT

(11) **EP 1 794 947 B1**
(45) Veröffentlichungstag und Bekanntmachung des Hinweises auf die Patenterteilung: **06.07.2011**
(21) Anmeldenummer: 05796920.6
(22) Anmeldetag: 08.09.2005
(51) Int. Cl.: H04L 12/56

(54) **AUTOMATISCHE NACHFÜHRUNG VON NETZPARAMETERN BEI VERÄNDERUNGEN DER VERKEHRSLAST**
AUTOMATIC TRACKING OF NETWORK PARAMETERS IN THE EVENT OF CHANGES IN TRAFFIC LOAD
POURSUITE AUTOMATIQUE DE PARAMETRES DE RESEAU EN CAS DE MODIFICATIONS DE LA CHARGE DE TRAFIC

(30) Priorität: 22.09.2004 DE 102004045980
(43) Veröffentlichungstag der Anmeldung: 13.06.2007
(73) Patentinhaber: Nokia Siemens Networks GmbH & Co. KG, 81541 München (DE)
(72) Erfinder: WALTER, Uwe, 76356 Weingarten (DE); GRUBER, Claus, 80336 München (DE); CHARZINSKI, Joachim, 81825 München (DE); WINTER, Martin, 83024 Rosenheim (DE)
(86) Internationale Anmeldenummer: PCT/EP2005/054438
(87) Internationale Veröffentlichungsnummer: WO 2006/032615

(56) Entgegenhaltungen:
- EP-A- 0 629 065
- US-A1- 2003 081 628
- UWE WALTER: "Automatische Netzoptimierung mittels eines zentralen Management-Knotens" ITG, 5. WÜRZBURGER WORKSHOP, "IP-NETZMANAGEMENT, NETZPLANUNG UND OPTIMIERUNG", [Online] 19. Juli 2005 (2005-07-19), Seiten 1-16, XP002356057 Würzburg Gefunden im Internet: URL:http://wi3x10.informatik.uni-wuerzburg .de/ITG/2005/presentations/uwe.walter.pdf> [gefunden am 2005-11-24]
- JENS MILBRANDT, MICHAEL MENTH, STEFAN KOPF: "Adaptive Bandwidth Allocation: Impact of Traffic Demand Models for Wide Area Networks" RESEARCH REPORT SERIES, [Online] Seiten 1-12, XP002356058 Würzburg Gefunden im Internet: URL:http://wi3x10.informatik.uni-wuerzburg .de/TR/tr363.pdf> [gefunden am 2005-11-25]
- MENTH M ET AL: "A performance evaluation framework for network admission control methods" NETWORK OPERATIONS AND MANAGEMENT SYMPOSIUM, 2004. NOMS 2004. IEEE/IFIP SEOUL, KOREA APRIL 19-23, 2004, PISCATAWAY, NJ, USA,IEEE, Bd. 1, 19. April 2004 (2004-04-19), Seiten 307-320, XP010712590 ISBN: 0-7803-8230-7
- HOOGENDOOM C ET AL: "Towards carrier-grade next generation networks" COMMUNICATION TECHNOLOGY PROCEEDINGS, 2003. ICCT 2003. INTERNATIONAL CONFERENCE ON APRIL 9 - 11, 2003, PISCATAWAY, NJ, USA,IEEE, Bd. 1, 9. April 2003 (2003-04-09), Seiten 302-305, XP010643595 ISBN: 7-5635-0686-1

## Beschreibung

Die Erfindung betrifft ein Verfahren und eine Vorrichtung zur Nachführung von Netzparametern eines mit Links gebildeten Kommunikationsnetzes mit Zugangskontrollen zwecks Begrenzung der Verkehrslast.

Eine der derzeit wichtigsten Entwicklungen auf dem Gebiet der Netze ist die Weiterentwicklung von herkömmlichen Datennetzen oder Paketnetzen für die Übertragungen von so genanntem Echtzeitverkehr, d.h. Sprache, Audio-Informationen und Videosignalen. Die Gewährleistung von Echtzeitverkehr setzt die Einhaltung von so genannten Dienstgütemerkmalen voraus. Übertragener Verkehr darf zur Erhaltung der Dienstgüte Schwellwerte für die Verzögerung bzw. der Latenz, den Verwurf von Paketen und den Jitter, d.h. die Schwankungen in der Übertragungszeit einzelner Pakete, nicht überschreiten. Eine wichtige Maßnahme für die Einhaltung von Dienstgüteparametern ist die Verkehrsbeschränkung für Paketnetze, über die Echtzeitverkehr übertragen werden soll. Diese Verkehrsbeschränkung wird in der Regel mit so genannten Zugangskontrollen vorgenommen, d.h. neu zu übertragender Verkehr muss angemeldet werden und wird nur zugelassen, wenn die Zulassung dieses Verkehrs nicht die Überschreitung einer Grenze für den maximal zuzulassenden Verkehr bewirken würde.

Bei einer Festsetzung von Grenzen für eine den Verkehr beschränkende Zugangskontrolle ist Folgendes zur berücksichtigen: Die Festsetzung der Grenzen soll einerseits die gewünschte Übertragungsqualität gewährleisten, andererseits soll der über das Netz übertragene Verkehr optimiert werden, d.h. die Wahrscheinlichkeit für eine Nichtzulassung von Verkehr soll möglichst minimiert werden. Deshalb orientiert man sich bei der Festsetzung von Grenzen üblicherweise an der so genannten Verkehrsmatrix, d.h. dem Verkehrsvolumen, das zwischen (Rand)Knoten des Netzes übertragen werden soll. Als Maß für die geeignete Festsetzung von Grenzen verwendet man häufig die so genannte Blockierwahrscheinlichkeit, d.h. ein Maß für die Wahrscheinlichkeit, dass ein zwischen zwei Knoten zu übertragender Verkehrsstrom nicht zugelassen wird bzw. die Häufigkeit, mit der ein solcher Verkehrsstrom abgewiesen wird. Eine Möglichkeit zu einer fairen Festsetzung von Grenzen ist, diese so festzusetzen, dass die Blockierwahrscheinlichkeiten für in beliebige Richtungen über das Netz übertragene Verkehrsströme gleich sind. Eine wirtschaftlichere Festsetzung bevorzugt Verkehrsrichtungen, die mit einer hohen Verkehrsmenge beaufschlagt sind, um so den gesamten über das Netz übertragenen Verkehr zu steigern.

Hoogendoorn et al. (Hoogendoorn, C. et al: "Towards carriergrade next generation networks", COMMUNICATION TECHNOLOGY PROCEEDINGS, 2003, ICCT 2003, INTERNATIONAL CONFERENCE ON APRIL 9-11, 2003, PISCATAWAY, NJ, USA, IEEE, Bd. 1, 9. April 2003 (2003-04-09), Seiten 302-305, XP010643595, TSBN: 7-5635-0686-1) offenbaren ein Verfahren und eine Vorrichtung zur Nachführung von Netzparametern eines mit Links gebildeten Kommunikationsnetzes mit Zugangskontrollen zwecks Begrenzung der Verkehrslast, bei dem eine Verkehrsmatrix des Netzes regelmäßig ermittelt wird und anhand der aktuellen Verkehrsmatrix neue Werte für im Rahmen der Zugangskontrollen verwendete Grenzen bestimmt werden.

Eine Änderung des über das Netz übertragenen Verkehrsaufkommens und damit der Verkehrsmatrix resultiert in veränderten Blockierwahrscheinlichkeiten. Diese Veränderung der Blockierwahrscheinli.chkeiten kann dazu führen, dass weniger Verkehr über das Netz übertragen wird als befördert werden könnte. Daher wird die Einstellung der Grenzen für die Zugangskontrollen vom Betreiber bei Bedarf händisch an veränderte Verkehrssituationen angepasst.

Die Erfindung hat zur Aufgabe, die transportierte Verkehrsmenge in einem Netz mit Zugangskontrollen auf effiziente Weise zu optimieren.

Die Aufgabe wird durch ein Verfahren nach Anspruch 1 und eine Vorrichtung nach Anspruch 7 gelost.

Erfindungsgemäß wird vorgeschlagen, die Verkehrsmatrix des Netzes regelmäßig zu ermitteln und anhand der aktuellen, d.h. zuletzt ermittelten Verkehrsmatrix zumindest eine Blockierwahrscheinlichkeit zu bestimmen. Es wird dann überprüft, ob die ermittelte Blockierwahrscheinlichkeit ein Kriterium für einen ordnungsgemäßen bzw. plangemäßen Netzbetrieb erfüllt, z.B. unterhalb eines Schwellenwertes liegt. Bei Nichterfüllen des Kriteriums werden anhand der aktuellen Verkehrsmatrix neue Werte für im Rahmen der Zugangskontrollen verwendete Grenzen neu bestimmt. Diese Neubestimmung erfolgt vorzugsweise nach Maßgabe einer Absenkung der Blockierwahrscheinlichkeit. Nach der Bestimmung dieser Werte wird überprüft, ob das Kriterium bei der Neufestsetzung der Grenzen auf diese Werte erfüllt wäre. Falls das Kriterium erfüllt wäre, werden die Grenzen auf diese Werte festgesetzt, so dass die Blockierwahrscheinlichkeit abgesenkt wird.

Gemäß einer Weiterbildung des Anmeldegegenstandes können bei Nichterfüllung des Kriteriums anhand der aktuellen Verkehrsmatrix neue Werte für Linkgewichte bzw. Linkmetriken des Netzes zwecks Optimierung des Transports von Verkehr durch das Netz bestimmt werden. Es können dann auf Grundlage der neuen Werte für die Linkgewichte neue Werte für im Rahmen der Zugangskontrollen verwendete Grenzen bestimmt werden. Anschließend wird überprüft, ob die neuen Werte für die Grenzen zu einem Erfüllen des Kriteriums führen und bei Erfüllen des Kriteriums werden diese Werte für die Grenzen für die Zugangskontrollen übernommen. Dieses Vorgehen gemäß der Weiterbildung kann sich an eine Neufestsetzung von Grenzen für die Zugangskontrolle ohne Veränderung von Linkgewichten anschließen, wenn die erste Neufestsetzung von Grenzen nicht zur Erfüllung des Kriteriums führt.

Vorzugsweise werden alle für die Übertragung von Verkehr über das Netz relevanten Blockierungswahrscheinlichkeiten berechnet und alle auf Einhaltung eines Kriteriums überprüft. Eine Neufestsetzung von Grenzen kann dann im Sinne der Absenkung von allen Blockierwahrscheinlichkeiten stattfinden, die das jeweilige Kriterium nicht erfüllen.

Bei der durch die Bestimmung neuer Werte für die Grenzen vorgenommenen Absenkung der Blockierwahrscheinlichkeit bzw. der Blockierwahrscheinlichkeiten können Nebenbedingungen einbezogen werden, z.B. die relativen Größen der verschiedenen Blockierwahrscheinlichkeiten zueinander.

Die Erfindung kann auch bei Verwendung verschiedener Verkehrsklassen Verkehrsklassen-spezifisch angewandt werden, d.h. z.B. dass die Kriterien je nach Verkehrsklasse unterschiedlich sind. Bei Anwendung der Kriterien können neben der Blockierwahrscheinlichkeit auch andere Parameter, wie die Paketverlustrate und gemessene Linkauslastungen miteinbezogen werden.

Die Erfindung erlaubt eine automatische Berechnung bzw. Konfigurierung von Netzparametern im Sinne einer optimierten Verkehrsbeschränkung. Der Betreiber braucht damit keine externen Optimierungsprogramme zu verwenden, welche mit einer Konversion von Netzparametern zwischen verschiedenen Formaten oder einem manuellen Einspielen von Parametern verbunden wäre. Eine Aufwandsreduktion ist die Folge.

Ein zusätzlicher Vorteil ist, dass die Reaktion auf den Verkehr betreffende Schwankungen oder Veränderungen schneller und systematischer erfolgt. Die erfindungsgemäße automatische Nachführung von Parametern entlastet den Netzbetreiber, der sich im Netzkontrollzentrum nicht um Verkehrsänderungen kümmern muss.

Die Erfindung lässt sich vorteilhaft weiterentwickeln, indem Änderungen der Topologie des Netzes (z.B. bei Linkausfällen) automatisch detektiert und für die Nachführung von Netzparametern gemeldet werden. Die neue Topologie kann dann der Bestimmung neuer Werte für die bei der Zugangskontrolle verwendeten Grenzen zugrunde gelegt werden. Das Netz reagiert durch Neubestimmung der Grenzen auf durch Topologieänderungen hervorgerufene Verkehrsumlagerungen, ohne dass das Netzwerkmanagement extra Anpassungsmaßnahmen vornehmen müsste. Diese Neubestimmung kann instantan oder mit einer gewissen Verzögerungszeit erfolgen. Durch eine verzögerte Reaktion kann erreicht werden, dass kurzzeitige Topologieänderungen, die kein Nachsteuern von Netzparametern erfordern, unberücksichtigt bleiben. Eine derartige Topologieänderung ist z.B. ein kurzzeitiger Ausfall eines Links.

Die Erfindung kann z.B. auf einem zentralen Netzwerk-Kontrollserver implementiert werden. Andere Möglichkeiten sind, die Erfindung in einem Netzwerk-Management-System oder in einer Dienststeuerungsvorrichtung zu lokalisieren. Je nach Netz ist es auch sinnvoll, die verschiedenen bei dem erfindungsgemäßen Verfahren auftretenden Schritte bzw. Funktionen verteilt im Netz in verschiedenen Netzelementen anzuordnen. Beispielsweise können Aufgaben von Knoten bzw. Routern des Netzes oder den für die Zugangkontrolle vorgesehenen Netzelementen vorgenommen werden.

Im Folgenden wird der Erfindungsgegenstand im Rahmen eines Ausführungsbeispiels anhand von Figuren näher erläutert. Es zeigen:
- Figur 1: Ablaufplan eines erfindungsgemäßen Verfahrens
- Figur 2: Ablaufplan aus Figur 1 mit zusätzlich vorgesehenem Input bei Änderung der Netztopologie
- Figur 3: Schematische Darstellung eines Netzwerk- Kontrollservers mit den für die Erfindung benötig- ten Funktionen

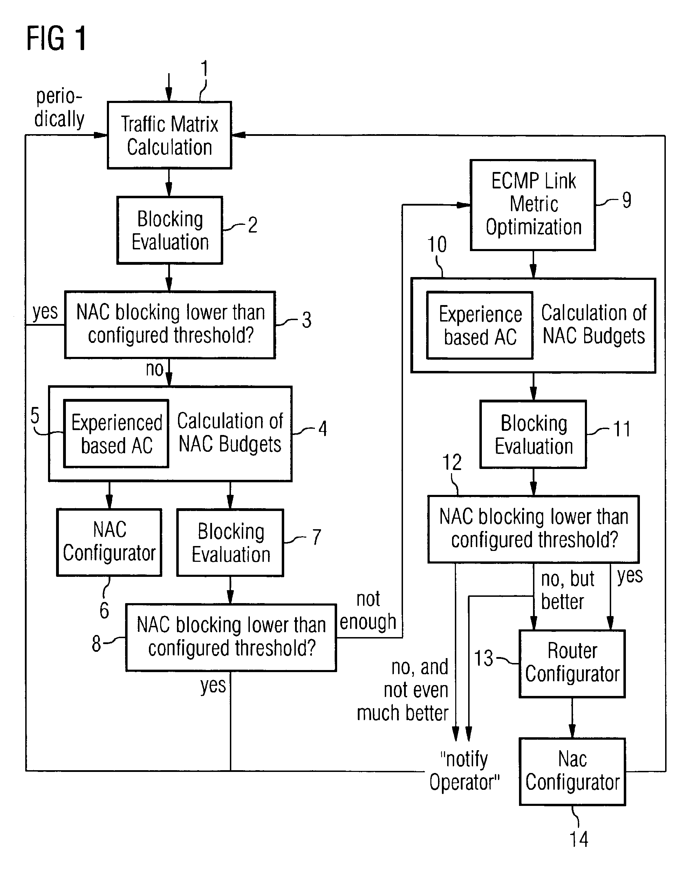

In Figur 1 sind die einzelnen, periodisch durchgeführten Schritte eines erfindungsgemäßen Verfahrens dargestellt:
- 1:: Berechnung der Verkehrsmatrix
- 2:: Berechnung der Blockierwahrscheinlichkeiten
- 3:: Überprüfung, ob die Blockierwahrscheinlichkeiten Schwel- lenwerte übersteigen. Falls nicht, erfolgt nach einer Periodendauer wieder eine Neuberechnung der Verkehrsmat- rix. Falls ein Schwellenwert überschritten wird, wird mit Punkt 4 fortgefahren.
- 4:: Die Grenzen für die Zugangskontrollen werden neu berech- net. Eine Anpassung der berechneten Grenzen kann auf Grundlage von Erfahrungswerten zusätzlich stattfinden. Erfahrungsgemäß können berechnete oder nominelle Grenzen überschritten werden, weil die tatsächlich übertragene Verkehrsmenge in der Regel geringer ist, als die für die Übertragung angemeldete. Daraus kann man einen Erfah- rungswert für eine Überbuchung ableiten (Schritt 5) und die Grenzen entsprechend anpassen (Schritt 6).
- 5:: Einbeziehung eines Erfahrenswertes für Überbuchung
- 6:: Anpassung der Grenzen nach Maßgabe der Überbuchung
- 7:: Berechnung der Blockierwahrscheinlichkeiten
- 8:: Überprüfung, ob die berechneten Blockierwahrscheinlich- keiten unterhalb der Schwellen liegen. Falls die Schwel- len nicht überschritten werden, wird wieder nach einer Periodendauer eine Neuberechnung der Verkehrsmatrix vor- genommen. Anderenfalls folgt Schritt 9.
- 9:: Neuoptimierung der Linkmetriken
- 10:: Neuberechnung der Grenzen
- 11:: Berechnung der Blockierwahrscheinlichkeiten
- 12:: Überprüfung, ob die neu berechneten Blockierwahrschein- lichkeiten niedriger sind als die Schwellen. Falls das Schwellenkriterium nicht eingehalten wird, wird das Netzwerk-Management benachrichtigt. Falls die neuen Grenzen zu verbesserten Blockierwahrscheinlichkeiten führen, die z.B. das Schwellenkriterium erfüllen, wird im Schritt 13 eine Neukonfigurierung der Router vorge- nommen.
- 13:: Router werden entsprechend der neu berechneten Linkmetri- ken konfiguriert.
- 14:: Die Grenzen für die Zugangskontrolle werden auf die neu berechneten Werte festgelegt.

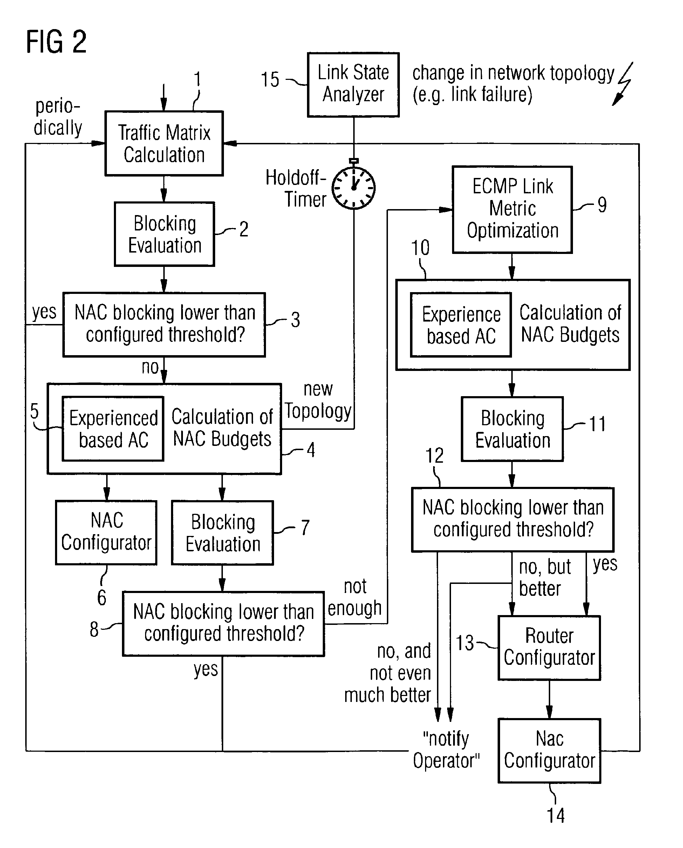

Figur 2 zeigt eine Erweiterung des Vorgehens entsprechend Figur 1. Veränderte Netzwerktopologien, z.B. bei Linkausfällen, können in dem in Figur 1 beschriebenen Konzept berücksichtigt und für die erste Berechnung von neuen Grenzen verwendet werden (15: Topologiebestimmung).

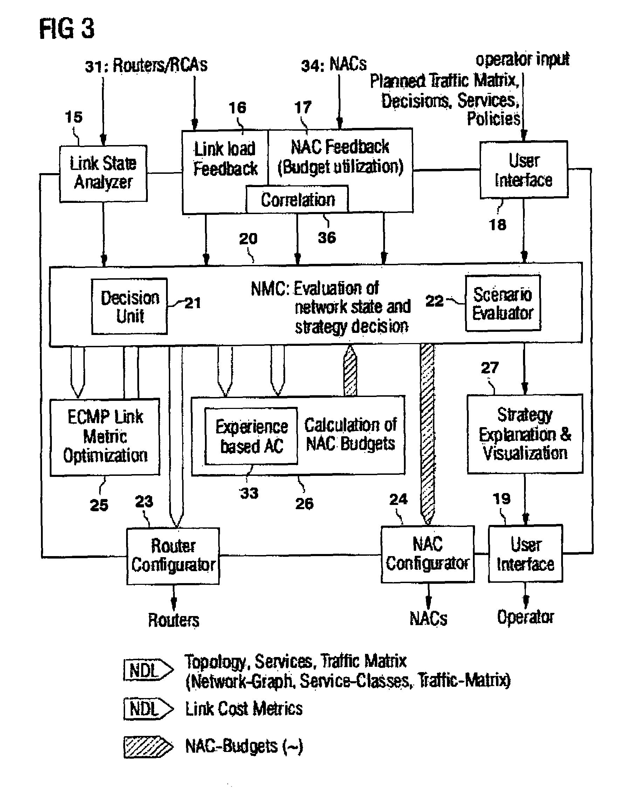

Figur 3 zeigt den Aufbau eines Netzwerk-Kontrollserver mit Funktionen für ein erfindungsgemäßes Vorgehen. Dieser Netzwerk-Kontrollserver erhält drei verschiedene Typen von Input, und zwar Input von Routern des Netzes bzw. so genannten Router-Control-Agents (RCA) (31), welche ein Modul zur Topologieanalyse (15) und ein Modul zur Kontrolle der Linklast (16) mit Informationen versorgen. Weiterer Input kommt von den Netzwerk-Kontrollinstanzen (34), welche die aktuelle Auslastung der Grenzen für die Zugangskontrollen und andere Informationen an ein Modul zur Überwachung der Budget-Ausnutzung (17) übermitteln. Schließlich besteht die Möglichkeit, geplante Verkehrsmatrizen, Dienste, Bewertungskriterien und ähnliches über eine Benutzerschnittstelle (18) einzugeben. Ein zentraler Bestandteil des Netzwerk-Kontrollservers ist ein Modul für die Beurteilung des Betriebszustands des Netzes und für Strategieentscheidungen (20). Diesem Modul wird - eventuell in vorverarbeiteter bzw. aufbereiteter Form, z.B. mittels eines Verarbeitungsmoduls (36) - der gesamte Input des Netzwerk-Kontrollservers zugeleitet. Das Modul enthält einen Bestandteil für zu treffende Entscheidungen (21) und einen Bestandteil für die Beurteilung von verschiedenen Szenarien (22). Mit Hilfe des Zentralmoduls (20) werden dann folgende Informationen bzw. Ergebnisse erzeugt: eine optimierte Linkmetrik (im Modul 25), neu berechnete Grenzen für die Zugangskontrolle (im Modul 26), eventuell durch Erfahrungswerte angepasst (33), und eine Aufbereitung der Strategie mit Erklärungen (im Modul 27). Der Netzwerk-Kontrollserver hat folgende Output-Module: einen Konfigurator für Router (23), einen Konfigurator für Grenzen für die Zugangskontrollen (24) und eine Benutzerschnittstelle (19) für an den Netzbetreiber bzw. die Netzverwaltung weiterzugebende Informationen.

Dieser Netzwerk-Kontrollserver kann benutzt werden, um die in Figur 1 bzw. Figur 2 dargestellten Verfahren zu implementieren. Alternativ können auch diese Verfahren in anderen Vorrichtungselementen, eventuell in verteilter Form, realisiert werden.

## Patentansprüche

1. Verfahren zur Nachführung von Netzparametern eines mit Links gebildeten Kommunikationsnetzes mit Zugangskontrollen zwecks Begrenzung der Verkehrslast, bei dem eine Verkehrsmatrix des Netzes regelmäßig ermittelt wird (1) und anhand der Verkehrsmatrix Werte für im Rahmen der Zugangskontrollen verwendete Grenzen bestimmt werden (4), **dadurch gekennzeichnet, daß**
- eine Blockierwahrscheinlichkeit für einer Zugangskontrolle unterzogenen Verkehr aus der aktuellen Verkehrsmatrix bestimmt wird (2),
- überprüft wird, ob die ermittelte Blockierwahrscheinlichkeit ein Kriterium für einen planmäßigen Netzbetrieb erfüllt (3),
- bei Nichterfüllen des Kriteriums anhand der aktuellen Verkehrsmatrix neue Werte für die im Rahmen der Zugangskontrollen verwendeten Grenzen bestimmt werden (4)
- nach der Bestimmung neuer Werte für die Grenzen überprüft wird, ob das Kriterium bei Neufestsetzung der Grenzen auf diese Werte erfüllt wird (7), und
- falls das Kriterium erfüllt wird, die Grenzen auf diese Werte festgesetzt werden (6).

2. Verfahren nach Anspruch 1,
**dadurch gekennzeichnet, dass**
- falls das Kriterium nach der Bestimmung neuer Werte für die Grenzen nicht erfüllt wird, anhand der aktuellen Verkehrsmatrix neue Werte für Linkgewichte des Netzes zur Optimierung des Transports von Verkehr durch das Netz bestimmt werden (9),
- neue Werte für im Rahmen der Zugangskontrollen verwendete Grenzen auf Basis der neuen Werte für die Linkgewichte bestimmt werden (10),
- nach der Bestimmung neuer Werte für die Grenzen überprüft wird, ob das Kriterium bei Neufestsetzung der Grenzen auf diese Werte erfüllt wird (11), und
- falls das Kriterium erfüllt wird (12), die Linkgewichte im Netz konfiguriert werden (13) und die Grenzen auf diese Werte festgelegt werden (14).

3. Verfahren nach Anspruch 1 oder 2,
**dadurch gekennzeichnet, dass**
- falls das Kriterium nicht erfüllt wird, eine übergeordnete Instanz des Netzwerk-Managements alarmiert wird.

4. Verfahren nach einem der vorhergehenden Ansprüche,
**dadurch gekennzeichnet, dass**
das Kriterium durch die Einhaltung eines Schwellenwertes gegeben ist.

5. Verfahren nach einem der vorhergehenden Ansprüche,
**dadurch gekennzeichnet, dass**
Änderungen der Topologie des Netzes bei der Bestimmung neuer Werte für die Grenzen berücksichtigt werden (15).

6. Verfahren nach Anspruch 5,
**dadurch gekennzeichnet, dass**
- die Durchführung des Verfahrens zur Nachführung von Netzparametern durch eine Änderung der Topologie des Netzes ausgelöst wird (15).

7. Vorrichtung zur Durchführung eines Verfahrens zur Nachführung von Netzparametern eines mit Links gebildeten Kommunikationsnetzes mit Zugangskontrollen zwecks Begrenzung der Verkehrslast, bei dem eine Verkehrsmatrix des Netzes regelmäßig ermittelt wird (1) und anhand der Verkehrsmatrix Werte für im Rahmen der Zugangskontrollen verwendete Grenzen bestimmt werden (4), mit Mitteln
- zur Bestimmung einer Blockierwahrscheinlichkeit für einer Zugangskontrolle unterzogenen Verkehr aus der aktuellen Verkehrsmatrix (2),
- zur Überprüfung, ob die ermittelte Blockierwahrscheinlichkeit ein Kriterium für einen planmäßigen Netzbetrieb erfüllt (20),
- zur Bestimmung anhand der aktuellen Verkehrsmatrix von neuen Werten für die im Rahmen der Zugangskontrollen verwendeten Grenzen (26), und
- zum Festsetzen der Werte für die im Rahmen der Zugangskontrollen verwendeten Grenzen (24).

8. Vorrichtung nach Anspruch 7, mit weiteren Mitteln
- zur Bestimmung anhand der aktuellen Verkehrsmatrix von neuen Werten für Linkgewichte des Netzes zur Optimierung des Transports von Verkehr durch das Netz (25), und
- zum Konfigurieren der Linkgewichte im Netz (23).

9. Vorrichtung nach Anspruch 7 oder 8, mit weiteren Mitteln
- zum Alarmieren einer übergeordneten Instanz des Netzwerk-Managements.

10. Vorrichtung nach Anspruch 7, 8 oder 9,
**dadurch gekennzeichnet, dass**
- die Vorrichtung in einem zentralen Kontrollserver, einem Netzmanagement-System, einer Dienststeuerungsvorrichtung, einem Router oder einer Zugangskontroll-Vorrichtung enthalten ist.

11. Vorrichtung nach Anspruch 7, 8 oder 9,
bei der die Mittel auf mindestens zwei Netzelemente verteilt angeordnet sind.

## Claims

1. Method for updating network parameters of a communication network formed with links and comprising access controls for the purpose of limiting the traffic load, in which a traffic matrix of the network is regularly determined (1) and using the traffic matrix, values are determined for limits used as part of the access controls (4), **characterized in that**
- a blocking probability for traffic subjected to an access control is determined from the current traffic matrix (2),
- it is checked whether the blocking probability determined meets a criterion for a regular network operation (3),
- if the criterion is not met, new values for the limits used as part of the access controls are determined based on the current traffic matrix (4),
- after the determination of new values for the limits, it is checked whether the criterion is met when the limits are configured to these values (7), and
- if the criterion is met, the limits are configured to these values (6).

2. Method according to Claim 1, **characterized in that**
- if the criterion is not met after the determination of new values for the limits, based on the current traffic matrix new values are determined for link weights of the network for optimizing the conveyance of traffic through the network (9),
- new values are determined on the basis of the new values for the link weights for limits used as part of the access controls (10),
- after the determination of new values for the limits, it is checked whether the criterion is met when the limits are configured to these values (11), and
- if the criterion is met (12), the link weights are configured in the network (13) and the limits are fixed to these values (14).

3. Method according to Claim 1 or 2, **characterized in that**
- if the criterion is not met, a higher-level entity of the network management is alerted.

4. Method according to any of the preceding claims, **characterized in that** the criterion is given by staying within a threshold value.

5. Method according to any of the preceding claims, **characterized in that** changes in the topology of the network are taken into consideration in the determination of new values for the limits (15).

6. Method according to Claim 5, **characterized in that**
- the execution of the method for updating network parameters is triggered by a change in the topology of the network (15).

7. Device for carrying out a method for updating network parameters of a communication network formed with links and comprising access controls for the purpose of limiting the traffic load, in which a traffic matrix of the network is regularly determined (1) and using the traffic matrix, values are determined for limits used as part of the access controls (4), comprising means
- for determining from the current traffic matrix (2) a blocking probability for traffic subjected to an access control,
- for checking whether the blocking probability determined meets a criterion for a regular network operation (20),
- for determining using the current traffic matrix new values for the limits used as part of the access controls (26), and
- for configuring the values for the limits used as part of the access controls (24).

8. Device according to Claim 7, comprising further means
- for determining using the current traffic matrix new values for link weights of the network for optimizing the conveyance of traffic through the network (25) and
- for configuring the link weights in the network (23).

9. Device according to Claim 7 or 8, comprising further means
- for alerting a higher-level entity of the network management.

10. Device according to Claim 7, 8 or 9, **characterized in that**,
- the device is contained in a central control server, a network management system, a service control device, a router or an access control device.

11. Device according to claim 7, 8 or 9,
in which the means are arranged distributed to at least two network elements.

## Revendications

1. Procédé de poursuite de paramètres de réseau d'un réseau de communication formé par des liens, avec des contrôles d'accès aux fins de la limitation de la charge de trafic, dans lequel une matrice de trafic du réseau est déterminée régulièrement (1) et des valeurs de limites utilisées dans le cadre des contrôles d'accès sont déterminées à l'aide de la matrice de trafic (4), **caractérisé en ce que** :
- une probabilité de blocage pour un trafic soumis à un contrôle d'accès est déterminée à partir de la matrice de trafic actuelle (2) ;
- il est vérifié si la probabilité de blocage déterminée remplit un critère de fonctionnement prévu du réseau (3) ;
- si le critère n'est pas rempli, de nouvelles valeurs des limites utilisées dans le cadre des contrôles d'accès sont déterminées à l'aide de la matrice de trafic actuelle (4) ;
- après la détermination de nouvelles valeurs des limites, il est vérifié si le critère est rempli si les limites sont refixées sur ces valeurs (7) ; et
- si le critère est rempli, les limites sont fixées sur ces valeurs (6).

2. Procédé selon la revendication 1, **caractérisé en ce que** :
- si le critère n'est pas rempli après la détermination de nouvelles valeurs des limites, de nouvelles valeurs de poids de liens du réseau sont déterminées à l'aide de la matrice de trafic actuelle pour optimiser le transport de trafic à travers le réseau (9) ;
- de nouvelles valeurs de limites utilisées dans le cadre des contrôles d'accès sont déterminées sur la base des nouvelles valeurs des poids de liens (10) ;
- il est vérifié, après la détermination de nouvelles valeurs des limites, si le critère est rempli si les limites sont refixées sur ces valeurs (11) ; et
- si le critère est rempli (12), les poids des liens dans le réseau (13) sont configurés et les limites sont fixées sur ces valeurs (14).

3. Procédé selon la revendication 1 ou 2, **caractérisé en ce que**, si le critère n'est pas rempli, une instance supérieure de la gestion du réseau est alertée.

4. Procédé selon l'une des revendications précédentes, **caractérisé en ce que** le critère est donné par le respect d'une valeur seuil.

5. Procédé selon l'une des revendications précédentes, **caractérisé en ce que** des modifications de la topologie du réseau sont prises en compte lors de la détermination de nouvelles valeurs des limites (15).

6. Procédé selon la revendication 5, **caractérisé en ce que** l'exécution du procédé de poursuite de paramètres de réseau est déclenchée par une modification de la topologie du réseau (15).

7. Dispositif pour exécuter un procédé de poursuite de paramètres de réseau d'un réseau de communication formé par des liens avec des contrôles d'accès aux fins de la limitation de la charge de trafic, dans lequel une matrice de trafic du réseau est déterminée régulièrement (1) et des valeurs de limites utilisées dans le cadre des contrôles d'accès sont déterminées à l'aide de la matrice de trafic (4), avec des moyens :
- pour déterminer, à partir de la matrice de trafic actuelle, une probabilité de blocage pour un trafic soumis à un contrôle d'accès (2) ;
- pour vérifier si la probabilité de blocage déterminée remplit un critère de fonctionnement prévu du réseau (20) ;
- pour déterminer, à l'aide de la matrice de trafic actuelle, de nouvelles valeurs des limites utilisées dans le cadre des contrôles d'accès (26) ; et
- pour fixer les valeurs des limites utilisées dans le cadre des contrôles d'accès (24).

8. Dispositif selon la revendication 7, comportant d'autres moyens :
- pour déterminer, à l'aide de la matrice de trafic actuelle, de nouvelles valeurs de poids de liens du réseau pour optimiser le transport de trafic à travers le réseau (25) ; et
- pour configurer les poids de liens dans le réseau (23).

9. Dispositif selon la revendication 7 ou 8, comportant d'autres moyens pour alerter une instance supérieure de la gestion du réseau.

10. Dispositif selon la revendication 7, 8 ou 9, **caractérisé en ce que** le dispositif est contenu dans un serveur de contrôle central, un système de gestion de réseau, un dispositif de commande de service, un routeur ou un dispositif de contrôle d'accès.

11. Dispositif selon la revendication 7, 8 ou 9, dans lequel les moyens sont disposés de manière répartie sur au moins deux éléments de réseau.
